# EUROPEAN PATENT SPECIFICATION

(11) **EP 2 245 943 B1**
(45) Date of publication and mention of the grant of the patent: **18.01.2012**
(21) Application number: 09305388.2
(22) Date of filing: 30.04.2009
(51) Int. Cl.: A23K 1/00, A23K 1/18

(54) **Microbial feed supplements and uses thereof in methods for reducing and/or inhibiting acidosis in polygastric herbivores.**
Mikrobielle Futterergänzungsmittel und Verwendungen davon in Verfahren zur Verringerung und/oder Verhinderung von Azidose in polygastrischen Pflanzenfressern
Suppléments alimentaires microbiens et leurs utilisations dans des procédés pour réduire et/ou inhiber l'acidose chez des herbivores à plusieurs estomacs

(43) Date of publication of application: 03.11.2010
(73) Proprietor: Danisco A/S, 1001 Copenhagen K (DK)
(72) Inventor: BERGER, Claudette, 91540, MENNECY (FR); NURMINEN, Päivi, FIN-02570, SIUNTIO (FI)
(74) Representative: Cabinet Plasseraud

(56) References cited:
- US-A- 5 529 793
- US-A- 5 534 271
- US-B1- 6 455 063
- SWINNEY-FLOYD ET AL: "THE IMPACT OF INOCULATION WITH PROPIONIBACTERIUM ON RUMINAL ACIDOSIS IN BEEF CATTLE (LACTOBACILLUS)" DIALOG DISSERTATION HOST- DIALOG DISSERTATION, 1997, XP002111092

## Description

The present invention relates to a microbial feed supplements and uses thereof in methods for reducing and/or inhibiting acidosis in polygastric herbivores.

Acidosis is the most important nutritional problem that the feedlot industry faces today. It is also a major challenge for the dairy industry as well. Because grain has been recognized as an excellent and economical energy source, both these industries have move towards the use of grains in their feeding programs. However, the abrupt conversion from a roughage or pasture diet of plant food, mainly cellulose, to a feedlot diet predominantly composed of grains, green corn, green apples, starches or other fast fermentable feeds can cause decreased production to feedlot cattle, decrease production in milk for dairy cows and even death from acidosis. Indeed, this transition from a predominantly roughage diet to a feedlot diet can be fatal to certain animals such as polygastric herbivores and especially in polygastric ruminants.

During a roughage diet, under the action of ruminal microflora, volatile fatty acids (VFAs) are usually formed in the following proportions: 55 to 70% acetic acid (a two carbon VFA produced from the digestion of fiber); 15 to 30% propionic acid (a three carbon VFA produced by starch and sugar digestion bacteria, which is converted to glucose by the liver); and 5 to 15% butyric acid (used as an energy source and for milk fat synthesis). These acids constitute important nutrients from diet digestion and their evaluation can be indicative of rumen fermentation and digestion. Indeed, when evaluating VFA patterns, the ratio of acetate to propionate or A:P ratio (60 percent acetate:25 percent propionate or 2.4:1) reflects the rumen fermentation pattern. Under optimal rumen fermentation conditions, the A:P ratio should be greater than 2.2 to 1: high levels of acetate can indicate a high fiber-low fermentable carbohydrate ration, while high levels of propionic acid can indicate reduced fiber digestion and acidosis.

During the fattening process at the feedlot, cattle is placed on a high grain diet, whereby the ruminal microflora ferments this feed and can produce as much as 100 or more milli-moles per liter of lactic acid. Indeed, when the metabolic activity of lactic acid producing microbial population exceeds the one utilising lactate, lactic acid is accumulated and the pH decreased, leading to a disturbance in microbial composition and activity. In fact, a large portion of the accumulated lactic acid which builds up in the rumen is in the form of the D(-) isomer, this form having a lower metabolism rate in the liver compared to the L(+) isomer. The absorption of large amounts of lactic acid across the rumen wall into the blood will exceed the ability of the pH regulatory systems thereby provoking the development of systemic acidosis. Generally, acidosis is said to occur when the pH of the rumen falls below 6.0 and preferably below 5.5 (normal is 6.0 to 7.0). This fall in pH will have two effects: first, the change in acidity will change the rumen's flora, with acid-producing bacteria taking over, which in turn will produce more acid, making the acidosis worse; second, the rumen will stop moving and become atonic, thereby lowering the animal's appetite and consequently decreasing the meat or milk production.

Recently, several processes have been proposed in order to reduce or slow down the production of acids responsible for acidosis in animals.

U. S. Patent Nos. 5,534,271 and 5,529,793 have suggested that both a lactic acid producing bacterium as well as a lactic acid utilizing bacterium be combined with a typical animal feedlot diet to assist in the transition of a ruminant diet from roughage to feedlot while minimizing the risk of acidosis. The idea behind including lactic acid producing bacterium (eg. *Lactobacillus*) to herbivore nutrition (especially ruminants), is to increase the responsiveness of the bacteria on lactate utilisation by having small amounts of lactic acid constantly present. However, although these patents list several classes of materials from each of the producing and utilizing categories which may be selected for combination with the animal feedstock, the only lactate utilizing cultures which are specifically enabled by the examples are *Propionibacterium* P-5, *Propionibacterium* P-42 and *Propionibacterium* P-99 and the only lactic acid producing cultures enabled by the examples are *Lactobacillus acidophilus* ATCC 53545 and *Lactobacillus acidophilus* strain LA45.

US patent application 2003/0007953 has discovered that amongst the thousands of permutations possible presented by the proposed combination of cultures in the previously mentioned patents, a synergistic result can occur with *Lactobacillus acidophilus* ATCC 53545 by selecting a very specific strain of lactate utilizing culture not specifically enabled in U. S. Patent Nos. 5,534,271 and 5,529,793, namely *Propionibacterium jensenii* P-63.

SWINNEY-FLOYD ET AL: "THE IMPACT OF INOCULATION WITH PROPIONIBACTERIUM ON RUMINAL ACIDOSIS IN BEEF CATTLE (LACTOBACILLUS)" DIALOG DISSERTATION HOST- DIALOG DISSERTATION, 1997 discloses a process for reducing acidosis in ruminants when converting from a roughage diet to a grain diet comprising the step of administering to said ruminant an acidosis inhibiting effective amount of Propionibacterium P-63, in combination with a lactic acid producing culture of LA3545. Rumen-cannulated cattle were used in the study to determine the Propionibacteria strain and its effect in the rumen ecosystem during acidotic conditions.

Consequently, despite the teachings above, there still exists a need in the art for *Propionibacterium jensenii* P-63, which when combined to a specifically defined lactic acid producing bacterium can demonstrate "unexpected increased efficacy against acidosis", that is the reduction and/or inhibition of the acids responsible for acidosis (whether acetic, propionic, butyric or lactic acid), while at the same time balancing the endogenous flora in order for polygastric herbivores to maintain a good metabolism.

Surprisingly, the Applicant has found that the combination of *Propionibacterium jensenii* P-63 with specifically defined lactic acid producing bacterium, such as the species *Lactobacillus rhamnosus, Lactobacillus paracasei, Lactobacillus farciminis* and the subspecie *Lactobacillus plantarum* Lp115 can demonstrate this "unexpected increased efficacy against acidosis".

Indeed, by reducing and/or inhibiting acidosis in polygastric herbivores, especially in polygastric ruminants, this may in turn optimize milk production, milk quality, meat production, meat quality as well as the fertility of the animals. Moreover, since an increase gas production is considered as being negative because it essentially reflects a loss of energy (VFA) and/or a loss of microbial protein for the animal in addition to its contribution to environmental issues, by helping maintain a good metabolism and a balanced endogeneous flora (both of which are extremely beneficial to the animal), this particular combination of bacteria, may also contribute to the environment by at least maintaining, if not reducing, the gas production from these animals.

According to the invention,

"*roughage diet*" (also restricted diet) is defined as a pasture diet made up especially of plant food which is mainly cellulosic in nature. Particularly, a roughage diet comprises plant materials containing a low % of nutrients, both total and digestible, per unit of weight, and which are generally bulky, coarse, and high in fiber content. An excess makes the food inefficient and should be avoided. Non limiting examples are grass, hay, alfalfa, straw, etc.

"*feedlot diet*" is defined as a high grain diet useful for fattening up animals. Non limiting examples are grains, green corn, green apples, carbohydrates (starches, cereal concentrates...), beet pulp, fast fermentable feedstuff or fast fermentable sugars.

"*fermentable sugars*" are selected from the group consisting of fast fermentable sugars, slow fermentable sugars and mixtures thereof.

"*fast fermentable sugars*" include, but are not limited to dextrose, glucose, lactose, saccharose, starch and their mixture.

"*slow fermentable sugars*" include, but are not limited to starch, hemicellulose, carboxymethylcellulose, molasse and their mixture.

Starch is included in both "fast" and "slow" fermentable sugars as it is more of an intermediate category. Indeed it can be faster to digest than some "slow" fermentable sugars, while it can also be "slower" to digest than some "fast" fermentable sugars.

"*short chain fatty acids*" include the major volatile fatty acids (acetic acid, propionic acid and butyric acid) as well as others such as, but not limited to, valeric acid, isobutyric acid (IBA), 2-methylbutyric acid (2-MBA), isovaleric acid (IVA). "*polygastric herbivores*" include, but are not limited to, bovinae, cervidae, antilocapridae and camelidae.

"*polygastric ruminants*" include, but are not limited to, cows, sheep, ewe, goat, dear, camel, giraffe.

"*administering or administration*" is defined as the action of introducing into the gastro-intestinal tractus of the polygastric herbivore, the microbial feed supplement according to the invention. In particular, said "administration" can be done orally by supplementing a combination of the feed diet to the polygastric herbivore simultaneoulsy or successively with the microbial feed supplement. The combination is then subsequently ingested by the polygastric herbivore. The administration can also be done by any other way where the microbial feed supplement in introduced into the gastro-intestinal tractus of the polygastric herbivore (eg. feeding tube).

An object of the present invention is a microbial feed supplement for polygastric herbivores comprising *Propionibacterium jensenii* P63 (a lactic acid utilizing bacterium) (known in the art, but also deposited according to the Budapest Treaty on January 15, 2009 in the name of Danisco Deutschland GmbH, Busch-Johannsen-Str.1 25899, Niebüll, Germany, at the Deutsche Sammlung von Mikroorganismen und Zellkulturen GmbH located at Inhoffenstr. 7 B, D-38124 Braunschweig, Germany under n° DSM22192) and one or more lactic acid producing bacteria selected from the group consisting of *Lactobacillus rhamnosus, Lactobacillus plantarum* Lp115, and mixtures thereof, said Lp115 having been deposited according to the Budapest Treaty on February 9, 2009 in the name of Danisco Deutschland GmbH, Busch-Johannsen-Str.1 25899, Niebüll, Germany, at the Deutsche Sammlung von Mikroorganismen und Zellkulturen GmbH located at Inhoffenstr. 7 B, D-38124 Braunschweig, Germany under n° DSM22266.

For example, when selecting more than one lactic acid producing bacteria for the combination with the *Propionibacterium jensenii* P63, the lactic acid producing bacteria can be selected from the same specie (eg. two or three or four *L. rhamnosus*) or from different species (eg. *L. rhamnosus* and *L. plantarum*).

According to a particular embodiment, the microbial feed supplement of the invention comprises a combination of *Propionibacterium jensenii* P63 with *Lactobacillus plantarum* Lp115.

According to a particular embodiment, the microbial feed supplement of the invention comprises a combination of *Propionibacterium jensenii* P63 with *Lactobacillus rhamnosus.* For example, a particular microbial feed supplement according to the invention comprises a combination of *Propionibacterium jensenii* P63 with *Lactobacillus rhamnosus* Lr32, said Lr32 having been deposited according to the Budapest Treaty on January 15, 2009 in the name of Danisco Deutschland GmbH, Busch-Johannsen-Str.1 25899, Niebüll, Germany, at the Deutsche Sammlung von Mikroorganismen und Zellkulturen GmbH located at Inhoffenstr. 7 B, D-38124 Braunschweig, Germany under n° DSM22193.

According to another particular embodiment, the microbial feed supplement of the invention comprises a combination of *Propionibacterium jensenii* P63 with *Lactobacillus rhamnosus* and *Lactobacillus plantarum* Lp115. For example, a particular microbial feed supplement according to the invention comprises a combination of *Propionibacterium jensenii* P63 with *Lactobacillus rhamnosus* Lr32 and *Lactobacillus plantarum* Lp115.

According to a typical embodiment, the proportion of lactic acid utilizing bacteria to lactic acid producing bacteria found in the microbial feed supplement according to the invention is comprised between 2:1 and 1:4, preferably between 1:1 and 1:3, and more preferably between 1:1 and 1:2.

Although the microbial feed supplement according to the invention can comprise activated bacteria (that is to say live bacteria, whose reproductive and enzymatic activities are not affected), typically some or all of the bacteria are inactivated. Indeed, either some of the bacteria of the microbial feed supplement can be inactivated or all of the bacteria can be inactivated. For example, *Propionibacterium jensenii* P63 can be inactivated and/or at least one of the lactic acid producing bacteria selected from the group consisting of *Lactobacillus rhamnosus, is, Lactobacillus plantarum* Lp 115 can be inactivated.

Inactivation significantly reduces the reproduction capacity of microorganisms without significantly affecting their enzymatic activity.

Typically during the inactivation process of microorganisms, the number of microorganisms capable of reproducing will be reduced by a factor superior to X, with X being selected from the following values: 10⁴, 10⁵, 10⁶, 10⁷, 10⁸, 10⁹, 10¹⁰ or 10¹¹.

Typically, microorganisms can be inactivated by a heat shock/treatment. For example, the microorganisms can be exposed to temperatures comprised between 40°C and 70°C. The duration of the heat shock/treatment will depend on the chosen temperature and on the microorganisms which have been selected to be inactivated. For example, the inactivation process can be achieved over a period of time comprised between 15 minutes and 96 hours. For instance, the microorganisms could be exposed to temperatures comprised between 60°C and 70°C over a period of time comprised between 20 and 40 hours.

Other techniques exist and can be used to inactivate microorganisms, such as ionization or light inactivation. Microorganisms can also, for example, be inactivated by storing them for long periods of time at temperatures or with humidity levels which are not compatible with their viability.

The microbial feed supplement according to the invention can typically be prepared by a method comprising a step of combining *Propionibacterium jensenii* P63, with at least one lactic acid producing bacterium selected from the group consisting of *Lactobacillus rhamnosus, Lactobacillus plantarum* Lp115, and mixtures thereof.

In particular, the method of preparation of the microbial feed supplement according to the invention comprises the step of combining *Propionibacterium jensenii* P63 either with *Lactobacillus rhamnosus* alone, *Lactobacillus plantarum* Lp115 alone or with *Lactobacillus rhamnosus* and *Lactobacillus plantarum* Lp115 together. Typically, the combination is preferably done between P63 and Lr32 or it can be done between P63 and Lp115 or between P63 with Lr32 and Lp115.

Typically, the microbial feed supplement as defined above is combined to a feedlot diet.

Another object of the present invention is a microbial feed supplement as defined above for use in a method for reducing and/or inhibiting acidosis in a polygastric herbivore.

In a particular embodiment, the microbial feed supplement for use in a method for reducing and/or inhibiting acidosis in a polygastric herbivore comprises *Propionibacterium jensenii* P63 and *Lactobacillus rhamnosus* Lr32.

In a particular embodiment, the microbial feed supplement for use in a method for reducing and/or inhibiting acidosis in a polygastric herbivore comprises *Propionibacterium jensenii* P63, *Lactobacillus rhamnosus* Lr32 and/or *Lactobacillus plantarum* Lp 115.

According to a particular embodiment, the microbial feed supplement is incorporated to a typical feedlot diet intended for a polygastric herbivore in order to help reduce and/or inhibit acidosis in said polygastric herbivore.

Typically, the administration of the microbial feed supplement to the polygastric herbivore can be done simultaneoulsy or successively with the administration of the feedlot diet.

Typically, the quantity of microbial feed supplement given to a polygastric herbivore per day is comprised between 10⁵ and 10¹³ CFU/animal/day, preferably between 10⁸ and 10¹² CFU/animal/day, more preferably 10⁹ to 10¹¹ CFU/animal/day, even more preferably around 10¹⁰ CFU/animal/day.

Typically, the quantity of microbial feed supplement given to a polygastric herbivore per kg of weight of the animal per day, is comprised between 2x10³ and 2x10¹⁰ CFU/kg of animal body weight/day, preferably between 2x10⁵ and 2x10⁹ CFU/kg of animal body weight/day, more preferably 2x10⁶ to 2x10⁸ CFU/kg of animal body weight/day, even more preferably around 2x10⁷ CFU/kg of animal body weight/day.

Typically, the quantity of microbial feed supplement per g of feedlot is comprised between 50 and 10¹⁰ CFU/g of feedlot, preferably between 5x10³ and 10⁹ CFU/g of feedlot, more preferably 5x10⁴ to 10⁸ CFU/g of feedlot, even more preferably around 10⁶ CFU/g of feedlot.

Typically the quantity of feedlot comprising the microbial supplement per kg of animal body weight per day is comprised between 0.000001g and 40g/kg body weight/day, preferably between 0.00002g and 20g/kg of body weight/day, more preferably between 2g and 20g/kg of body weight/day.

Another object of the present invention is a microbial feed supplement for use in a method for reducing and/or inhibiting acidosis in a polygastric herbivore, wherein the microbial feed supplement comprises *Propionibacterium jensenii* and one or more lactic acid producing bacteria selected from the group consisting of *Lactobacillus rhamnosus, Lactobacillus plantarum* Lp 115, and mixtures thereof.

In a particular embodiment, the microbial feed supplement for use in a method for reducing and/or inhibiting acidosis in a polygastric herbivore comprises *Propionibacterium jensenii* and *Lactobacillus rhamnosus* Lr32.

In a particular embodiment, the microbial feed supplement for use in a method for reducing and/or inhibiting acidosis in a polygastric herbivore comprises *Propionibacterium jensenii* and *Lactobacillus rhamnosus* Lr32 and/or *Lactobacillus plantarum* Lp115.

In a particular embodiment, the microbial feed supplement for use in a method for reducing and/or inhibiting acidosis in a polygastric herbivore comprises *Propionibacterium jensenii* P63 and one or more lactic acid producing bacteria selected from the group consisting of *Lactobacillus rhamnosus,* ; *Lactobacillus plantarum*Lp 115, and mixtures thereof.

In a particular embodiment, the microbial feed supplement for use in a method for reducing and/or inhibiting acidosis in a polygastric herbivore comprises *Propionibacterium jensenii* P63 and *Lactobacillus rhamnosus* Lr32.

In a particular embodiment, the microbial feed supplement for use in a method for reducing and/or inhibiting acidosis in a polygastric herbivore comprises *Propionibacterium jensenii* P63 and *Lactobacillus rhamnosus* Lr32 and/or *Lactobacillus plantarum* Lp115.

According to a particular embodiment, the microbial feed supplement is incorporated to a typical feedlot diet intended for a polygastric herbivore in order to help reduce and/or inhibit acidosis in said polygastric herbivore.

Typically, the administration of the microbial feed supplement to the polygastric herbivore can be done simultaneoulsy or successively with the administration of the feedlot diet.

Typically, the quantity of microbial feed supplement given to a polygastric herbivore per day is comprised between 10⁵ and 10¹³ CFU/animal/day, preferably between 10⁸ and 10¹² CFU/animal/day, more preferably 10⁹ to 10¹¹ CFU/animal/day, even more preferably around 10¹⁰ CFU/animal/day.

Typically, the quantity of microbial feed supplement given to a polygastric herbivore per kg of weight of the animal per day, is comprised between 2x10³ and 2x10¹⁰ CFU/kg of animal body weight/day, preferably between 2x10⁵ and 2x10⁹ CFU/kg of animal body weight/day, more preferably 2x10⁶ to 2x10⁸ CFU/kg of animal body weight/day, even more preferably around 2x10⁷ CFU/kg of animal body weight/day.

Typically, the quantity of microbial feed supplement per g of feedlot is comprised between 50 and 10¹⁰ CFU/g of feedlot, preferably between 5x10³ and 10⁹ CFU/g of feedlot, more preferably 5x10⁴ to 10⁸ CFU/g of feedlot, even more preferably around 10⁶ CFU/g of feedlot.

Typically the quantity of feedlot comprising the microbial supplement per kg of animal body weight per day is comprised between 0.000001g and 40g/kg body weight/day, preferably between 0.00002g and 20g/kg of body weight/day, more preferably between 2g and 20g/kg of body weight/day.

Another object of the present invention is a kit for a polygastric herbivore comprising seperately:
- *Propionibacterium jensenii* P63, and
- one or more lactic acid producing bacteria selected from the group consisting of *Lactobacillus rhamnosus, Lactobacillus plantarum* Lp115, and mixtures thereof.

In particular, the lactic acid producing bacterium comprised in the abovementioned kit is *Lactobacillus rhamnosus* or *Lactobacillus plantarum* Lp115 taken alone or in combination together.

In particular, the *Lactobacillus rhamnosus* comprised in the abovementioned kit is *Lactobacillus rhamnosus* Lr32.

Typically, the kit may also comprise a typical animal feedlot diet for the polygastric herbivore.

According to a particular embodiment, all of the objects of the present invention are designed for polygastric herbivores (non limiting examples being bovinae, cervidae, antilocapridae and camelidae). Even more particularly, the polygastric herbivores are polygastric ruminants such as, but not limited to, cows, sheeps, ewes, goats, dears, camels, giraffes.

Other features and advantages of the invention will emerge upon reading the following non limiting examples.

### EXAMPLES

In order to identify the best culture or combination of cultures capable of reducing lactate accumulation and increasing pH (>6), ruminal conditions during lactic acidosis were simulated. The goal here was to induce an unbalanced rumen microbiota leading to formation and accumulation of lactic acid. This was attempted by a sequential feeding protocol, where a phase of restricted feeding was followed by high load of fermentable carbohydrates to induce amylolytic fermentation. Thus the model would allow *in vitro* screening and identification of the best culture or combination of cultures to reduce accumulation of lactic acid and thus reduce acidosis.

### EXAMPLE 1

### A. Test strains

| | | |
|---|---|---|
| P63 | *Propionibacterium jensenii* | 2.20X 10¹¹ cfu/g |
| Lp115 | *Lactobacillus plantarum* | 4.00X10¹¹ cfu/g |
| Lr32 | *Lactobacillus rhamnosus* | 3.30X10¹¹ cfu/g |

The tested bacteria (Danisco Cultures) were in a form of freeze dried cultures (stored at -20°C). The strains were rehydrated (75 minutes at 22°C) in a solution (0.1% peptone - 0.5% NaCl - water), and applied according to the pre given cell counts (colony forming units/g - see above). The target level was 2.0X10⁵ cfu/ml of simulated rumen liquid.

### B. List of treatments in the experiment

The treatment doses are presented per simulation unit (47 ml).

Control treatment (#1) was rumen fluid (RF) with endogenous microflora, but without any test strains. The study treatments are shown in Table 1.

**Table 1**

| **Treatment** | | **cfu / unit** | **cfu / unit** | **cfu / unit** |
|---|---|---|---|---|
| | | **P63** | **Lp115** | **Lr32** |
| 1 | Control | | | |
| 2 | P63 | 9.40X10⁶ | | |
| 3 | Lp115 | | 9.40X10⁶ | |
| 4 | Lr32 | | | 9.40X10⁶ |
| 5 | P63+Lp115 | 4.70X10⁶ | 4.70X10⁶ | |
| 6 | P63+Lr32 | 4.70X10⁶ | | 4.70X10⁶ |
| 7 | P63+Lp115+Lr32 | 3.13X10⁶ | 3.13X10⁶ | 3.13X10⁶ |

### C. In vitro model

For the rumen simulation, two liters of rumen fluid was obtained from a fistulated Finnish Ayrshire cow (MTT Agrifood Research Finland, Jokioinen) after morning milking.

According to the lactation phase of this cow, the concentrate feeding had been adjusted to 12 kg per day. The rumen fluid was transported in insulated flasks provided with special stoppers allowing the release of developing overpressure. In the laboratory, the rumen fluid was strained through a metal sieve with a mesh size of 4 mm to remove the largest feed particles. During inoculation at 37°C, the rumen fluid was stirred under continuous flow of CO₂ to maintain it homogeneous and anaerobic. The fermentations were started within three hours of rumen fluid collection.

To generate the formation of lactic acid, a protocol of step-wise batch fermentation was applied.

In the first step of this sequential feeding protocol (Table 2), the fresh rumen fluid and the buffer (pH 6.3, modified from Tung RS, Kung L, Jr. In vitro effects of a thiopeptide and monensin on ruminal fermentation of soluble carbohydrates. J. Dairy Sci 1993, 76(4): 1083-90) were added in random order to simulation units already containing sources of nitrogen (Tryptone MC5; LAB M) and structural carbohydrates (carboxymethylcellulose; Fluka 21900). After 10-hour fermentation, only a dose of tryptone in the buffer was added to maintain the fermentation. During this step of restricted feeding, the fermentation was followed by measuring pH and gas production.

In the second step (23h after rumen fluid inoculation), a mixture of fermentable carbohydrates composed of wheat starch (Merck 111685) and glucose, was added to the units according to the order applied in the first step, together with a dose of tryptone and buffer. At this time point, the different test supplements (test strains) were added to the corresponding treatment units in a volume of 1 ml of the rehydration solution. To control treatment units only rehydration solution was added. The time point is reported as the beginning (0h) of the experiment.

### D. Protocol of sequential feeding to induce lactic acid formation

Additions are presented per simulation unit.

**Table 2**

| | **-23h** | **-13h** | **0h** |
|---|---|---|---|
| Rumen fluid (ml) | 10 | | |
| Buffer (ml) | 15 | 10 | 10 |
| Substrates (g) | 0.5 | 0.075 | 1 |
| *CM-cellulose (%)* | 85 | | |
| *Tryptone (%)* | 15 | 100 | 15 |
| *Wheat starch (%)* | | | 60 |
| *D+-glucose (%)* | | | 25 |

### Composition of the buffer (pH 6.3, modified from Tung & Kung, 1993 (see above))

The buffer was composed of 2.1 mM Na₂HPO₄ X 12H₂O, 1.1 mM KH₂PO₄, 6.9 mM HCI, 6.4 mM NaCl, 0.9 mM MgSO₄ X 7H₂O, 0.3 mM CaCl₂ X 2H₂O and 5 mM resazurin. Oxygen was removed by boiling the buffer under carbon dioxide for five minutes. To the cooled solution, sodium bicarbonate (31.2 mM), a solution of minerals (to a final concentration of 29 µM FeSO₄ X 7H₂O, 26 µM MnSO₄ X H₂O, 14 µM ZnSO₄ X 7H₂O, 8 µM CuSO₄ X 5H₂O, 8 µM CoCl₂ X 6H₂O) and reducing agent (to a final concentration of 2.6 mM cysteine, 2.0 mM NaOH and 1.3 mM Na₂S X 9H₂O) were added.

### E. Analyses

Per treatment, a total of 12 simulation units were started. Three replicate simulation units per treatment were terminated at 0, 3, 6 and 12 hour time points for measuring parameters describing the microbial activity. The formation of gas, pH, concentration of short chain fatty acids (SCFA) and lactic acid were analysed from all treatments.

During the step of restricted feeding, the fermentation was followed by measuring pH and production of gas. The amount of produced gas was moderate; approximately 57 ml during the whole step. In addition, pH remained quite constant (around 5.8; equal to the pH of the obtained rumen fluid) through the step, indicating conditions applicable for continuing to the next step. After the whole experiment it was observed, that the concentration of the major SCFA (acetic, propionic, butyric) was doubled, and the total amount increased to threefold. Rumen microorganisms had increased in numbers to some extent (1.3-fold) during the restricted feeding step.

To better show the actual production of different metabolites and to better detect the differences between treatments, the results have been adjusted to control (#1) treatment level at the beginning of the fermentation (at 0h). The results are shown as mean ± standard error (SE).

Student's t-test was performed to determine whether there was a significant difference between control and test treatment. P-values less than 0.05 were considered statisticaliy significant. This means acceptance of 5% possibility, that the attained result was a coincidence.

### Gas production kinetics

The amount of produced gas was measured manually using a scaled, airtight glass syringe, thereby also releasing the overpressure from the simulation unit. The measurement was performed four times during the 12 hours of fermentation, each time from all the remaining replicates. The manual measurement results were employed to model the gas production kinetics over the experimental period.

The production of gas was vigorous during the first half of the fermentation, after which it started to slow down. At the reported time points, throughout the fermentation, the cumulative gas production of all test strain treatments was equal to control. As previously mentioned, since increase gas production is considered negative, these results show that these bacteria or combination of bacteria are extremely beneficial and can contribute to the environment by maintaining controlled gas production in such animals, that is polygastric herbivores and in particular polygastric ruminants.

### pH

Immediately after opening the simulation unit and before exposure to oxygen, the pH was measured with a combined electrode.

The pH of the rumen fluid was measured to be 5.8, which was maintained during the restricted feeding. During the 12-hour study, the fermentation of degradable substrates into acidic compounds induced a decrease in pH, which dropped below 4.9.

However, the combination of P63+Lr32 showed the best overall increase in pH, while the combination of P63+Lp115+Lr32 exhibited a tendency to increase pH, compared to control treatment.

### Concentrations of short chain fatty acids (SCFA) and accumulation of lactic acid

A sample of 1 ml was collected and stored frozen (-20°C) for analysis of short chain fatty acids and lactic acid. The acids were analysed from the supernatant fraction by gas chromatography equipped with a flame ionization detector (Hoiben WE, Williams P, Gilbert MA et al. Phylogenetic analysis of intestinal microflora indicates a novel Mycoplasma phylotype in farmed and wild salmon. Microb Ecol 2002, 44(2):175-85.). The concentrations of acetic acid, propionic acid, isobutyric acid, butyric acid, 2-methylbutyric acid, valeric acid, isovaleric acid and lactic acid were determined.

### Acetic acid:

Compared to control treatment where none of the tested bacteria is present, higher acetic acid concentration could be measured with a supplementation of **P63** alone, **Lr32** alone and **Lp115** alone. However, with all of the combinations, whether **P63+Lr32, P63+Lp115** or **P63+Lp115+Lr32,** acetic acid production was lowered. The combination **P63+Lr32** was the most effective combination through the whole fermentation (-3% at 3h time point; -4% at 6h and -4% at 12h).

### Propionic acid:

Except for the combination P63+Lr32, **all** tested strains, alone or in combination, showed mainly the same or slightly higher values of propionic acid concentrations compared to the control. Indeed, only with the combination **P63+Lr32** did the production of propionic acid exhibit a 4% lower level when measured after 3 hours and a 3% lower level after 6 hours of fermentation.

### Butyric acid:

On average, **all** tested strains, alone or in combination, had a tendency to slightly increase or maintain the production of butyric acid compared to the control. In contrast, the combination **P63+Lp115** maintained the level of butyric acid at 3h, but showed a decrease at 6h compared to the control, while the combination **P63+Lr32** exhibited lower butyric acid production through the whole fermentation.

### Total SCFAs:

As a result from the reduced production of the major volatile fatty acids (acetic, propionic and butyric acid), the total SCFA concentrations were at a lower level at all time points for the **P63+Lr32** treatment.

### Lactic acid:

No lactic acid could be detected from the collected rumen fluid. However, just after substrate addition, at zero time point, some lactic acid could be measured from **all** treatment units, thus indicating its formation during the restricted feeding step. After addition of fast fermentable sugars there was fast formation of lactic acid in the simulation units, especially during the first three hours of fermentation. By 12 hours, the lactate level had exceeded the concentration of 40 mM, which was reflected as low pH. The *in vitro* formation of lactic acid was higher than consumption, suggesting the development of an unbalanced rumen microbiota, thereby providing optimal conditions for evaluating the efficiency of all test strains.

During the most vigorous phase of substrate fermentation, the most effective treatments tended to be **P63** alone and the combination of **P63+Lr32** as well as the combination of **P63+Lp115.**

The Applicants were thus able to show by the use of an *in vitro* acidosis simulation model, that formation of lactic acid was induced by the addition of fermentable carbohydrates. Moreover, during the whole *in vitro* fermentation, the concentration of lactic acid was increased. This demonstrated higher activity of lactic acid producing microbial population compared to lactic acid utilising microorganisms, and thus disturbed microbiota. Due to the accumulation of lactate, the pH was decreased approximately one unit (from 5.9 to 4.8) during the 12-hour fermentation.

Furthermore, Applicants were able to show that from all of the tested strains, overall results show that the combination of **P63** + **Lr32** allows a decrease of all the tested acids (propionic, butyric, acetic and lactic) and allows a decrease of the "relative amount of lactic acid" (i.e. lactic acid/(SFCA+ lactic acid)), while at the same time maintaining the gas production and also while having no negative effect on the biomass.

As for the combination of **P63** + **Lp115,** results show that this combination allows a decrease of the two strong acids responsible for acidosis (i.e. acetic acid and lactic acid) while maintaining gas production.

## Claims

1. Microbial feed supplement for polygastric herbivores comprising *Propionibacterium jensenii* P63 and one or more lactic acid producing bacteria selected from the group consisting of *Lactobacillus rhamnosus, Lactobacillus plantarum* Lp115, and mixtures thereof, said Lp115 having been deposited according to the Budapest Treaty on February 9, 2009 in the name of Danisco Deutschland GmbH, at the Deutsche Sammlung von Mikroorganismen und Zellkulturen GmbH under n° DSM22266.

2. The microbial feed supplement according to claim **1**, wherein *Propionibacterium jensenii* P63 is combined with *Lactobacillus plantarum* Lp 115.

3. The microbial feed supplement according to claim **1**, wherein *Propionibacterium jensenii* P63 is combined with *Lactobacillus rhamnosus.*

4. The microbial feed supplement according to claim **1**, wherein *Propionibacterium jensenii* P63 is combined with *Lactobacillus rhamnosus* and *Lactobacillus plantarum* Lp 115.

5. The microbial feed supplement according to any one of claims **1 to 4**, wherein the *Lactobacillus rhamnosus* is *Lactobacillus rhamnosus* Lr32 deposited according to the Budapest Treaty on January 15, 2009 in the name of Danisco Deutschland GmbH, at the Deutsche Sammlung von Mikroorganismen und Zellkulturen GmbH under n°DSM22193.

6. The microbial feed supplement according to any one of claims **1 to 5**, wherein the some or all of the bacteria are inactivated.

7. The microbial feed supplement according to any one of claims **1 to 6**, wherein the proportion of *Propionibacterium jensenii* P63 to lactic acid producing bacteria in the microbial feed supplement according to the invention is comprised between 2:1 and 1:4, preferably between 1:1 and 1:3, and more preferably between 1:1 and 1:2.

8. The microbial feed supplement according to any one of claims **1 to 7,** wherein said supplement is combined to a feedlot diet.

9. Microbial feed supplement according to anyone of claims **1 to 8** for use in a method for reducing and/or inhibiting acidosis in a polygastric herbivore.

10. Kit for a polygastric herbivore comprising seperately:
- *Propionibacterium jensenii* P63, and
- one or more lactic acid producing bacteria selected from the group consisting of *Lactobacillus rhamnosus, Lactobacillus plantarum* Lp115, and mixtures thereof.

11. The kit according to claim **10**, wherein the *Lactobacillus rhamnosus* is *Lactobacillus rhamnosus* Lr32.

12. The kit according to any one of claims **10 to 11,** further comprising an animal feedlot diet for the polygastric herbivore.

13. The microbial feed supplement according to any one of claims **1 to 9,** or the kit according to any one of claims **10-12,** wherein the polygastric herbivore is a polygastric ruminant.

## Patentansprüche

1. Mikrobielle Futterergänzung für polygastrische Herbivoren, die *Propionibacterium jensenii* P63 und eines oder mehrere Milchsäure-produzierende Bakterien, die ausgewählt sind aus der Gruppe, die aus *Lactobacillus rhamnosus, Lactobacillus plantarum* Lp115 und Mischungen davon besteht, umfasst, wobei Lp115 gemäß dem Budapester Vertrag am 9. Februar 2009 im Namen der Danisco Deutschland GmbH hinterlegt wurde, bei der Deutschen Sammlung von Mikroorganismen und Zellkulturen GmbH unter der Nr. DSM22266.

2. Mikrobielle Futterergänzung gemäß Anspruch 1, wobei *Propionibacterium jensenii* P63 mit *Lactobacillus plantarum* Lp115 kombiniert ist.

3. Mikrobielle Futterergänzung gemäß Anspruch 1, wobei *Propionibacterium jensenii* P63 mit *Lactobacillus rhamnosus* kombiniert ist.

4. Mikrobielle Futterergänzung gemäß Anspruch 1, wobei *Propionibacterium jensenii* P63 mit *Lactobacillus rhamnosus* und *Lactobacillus plantarum* Lp115 kombiniert ist.

5. Mikrobielle Futterergänzung gemäß einem der Ansprüche 1 bis 4, wobei der *Lactobacillus rhamnosus Lactobacillus rhamnosus* Lr32 ist, der gemäß dem Budapester Vertrag am 15. Januar 2009 im Namen der Danisco Deutschland GmbH hinterlegt wurde, bei der Deutschen Sammlung von Mikroorganismen und Zellkulturen GmbH unter der Nr. DSM22193.

6. Mikrobielle Futterergänzung gemäß einem der Ansprüche 1 bis 5, wobei einige oder alle der Bakterien inaktiviert sind.

7. Mikrobielle Futterergänzung gemäß einem der Ansprüche 1 bis 6, wobei das Verhältnis von *Propionibacterium jensenii* P63 zu Milchsäure-produzierenden Bakterien in der mikrobiellen Futterergänzung gemäß der Erfindung zwischen 2:1 und 1:4 liegt, vorzugsweise zwischen 1:1 und 1:3, und in mehr bevorzugter Weise zwischen 1:1 und 1:2.

8. Mikrobielle Futterergänzung gemäß einem der Ansprüche 1 bis 7, wobei die Ergänzung mit einer Feedlot-Ernährung kombiniert wird.

9. Mikrobielle Futterergänzung gemäß einem der Ansprüche 1 bis 8 zur Verwendung in einem Verfahren zum Reduzieren und/oder Inhibieren von Acidose in einem polygastrischen Herbivoren.

10. Kit für einen polygastrischen Herbivoren, getrennt umfassend:
- *Propionibacterium jensenii* P63 und
- eines oder mehrere Milchsäure-produzierende Bakterien, die ausgewählt sind aus der Gruppe, die aus *Lactobacillus rhamnosus, Lactobacillus plantarum* Lp115 und Mischungen davon besteht.

11. Kit gemäß Anspruch 10, wobei der *Lactobacillus rhamnosus Lactobacillus rhamnosus* Lr32 ist.

12. Kit gemäß einem der Ansprüche 10 bis 11, der ferner eine Tier-Feedlot-Ernährung für den polygastrischen Herbivoren umfasst.

13. Mikrobielle Futterergänzung gemäß einem der Ansprüche 1 bis 9 oder der Kit gemäß einem der Ansprüche 10 bis 12, wobei der polygastrische Herbivore ein polygastrischer Wiederkäuer ist.

## Revendications

1. Supplément alimentaire microbien pour herbivores polygastriques comprenant *Propionibacterium jensenii* P63 et une ou plusieurs bactéries produisant de l'acide lactique choisies dans le groupe constitué par *Lactobacillus rhamnosus, Lactobacillus plantarum* Lp115, et leurs mélanges, ladite Lp115 ayant été déposé selon le traité de Budapest le 9 février 2009 au nom de Danisco Deutschland GmbH, au Deutsche Sammlung von Mikroorganismen und Zellkulturen GmBH sous le numéro DSM22266.

2. Supplément alimentaire microbien selon la revendication 1, dans lequel *Propionibacterium jensenii* P63 est combiné avec *Lactobacillus plantarum* Lp115.

3. Supplément alimentaire microbien selon la revendication 1, dans lequel *Propionibacterium jensenii* P63 est combiné avec *Lactobacillus rhamnosus.*

4. Supplément alimentaire bactérien selon la revendication 1, dans lequel *Propionibacterium jensenii* P63 est combiné avec *Lactobacillus rhamnosus* et *Lactobacillus plantarum* Lp 115.

5. Supplément alimentaire bactérien selon l'une quelconque des revendications 1 à 4, dans lequel *Lactobacillus rhamnosus* est *Lactobacillus rhamnosus* Lr32 déposé selon le traité de Budapest le 15 janvier 2009 au nom de Danisco Deutschland GmbH, au Deutsche Sammlung von Mikroorganismen und Zellkulturen GmBH sous le numéro DSM22193.

6. Supplément alimentaire microbien selon l'une quelconque des revendications 1 à 5, dans lequel tout ou partie des bactéries sont inactivées.

7. Supplément alimentaire bactérien selon l'une quelconque des revendications 1 à 6, dans lequel la proportion de *Propionibacterium jensenii* P63 par rapport aux bactéries produisant de l'acide lactique dans le supplément alimentaire microbien selon la présente invention est comprise entre 2 : 1 et 1 : 4, de préférence entre 1 : 1 et 1 : 3, et de manière davantage préférée entre 1 : 1 et 1 : 2.

8. Supplément alimentaire bactérien selon l'une quelconque des revendications 1 à 7, dans lequel ledit supplément est combiné avec un régime d'engraissement.

9. Supplément alimentaire bactérien selon l'une quelconque des revendications 1 à 8 à utiliser dans un procédé de réduction et/ou d'inhibition d'acidose chez un herbivore polygastrique.

10. Kit pour un herbivore polygastrique comprenant séparément :
- *Propionibacterium jensenii* P63, et
- une ou plusieurs bactéries produisant de l'acide lactique choisies dans le groupe constitué par *Lactobacillus rhamnosus, Lactobacillus plantarum* Lp 115 et leurs mélanges.

11. Kit selon la revendication 10, dans lequel *Lactobacillus rhamnosus* est *Lactobacillus rhamnosus* Lr32.

12. Kit selon l'une quelconque des revendications 10 à 11, comprenant en outre un régime alimentaire d'engraissement animal pour l'herbivore polygastrique.

13. Supplément alimentaire bactérien selon l'une quelconque des revendications 1 à 9, ou kit selon l'une quelconque des revendications 10 à 12, dans lequel l'herbivore polygastrique est un ruminant polygastrique.
